# EUROPÄISCHE PATENTSCHRIFT

(11) **EP 1 623 858 B1**
(45) Veröffentlichungstag und Bekanntmachung des Hinweises auf die Patenterteilung: **08.09.2010**
(21) Anmeldenummer: 05016707.1
(22) Anmeldetag: 01.08.2005
(51) Int. Cl.: B60H 1/00

(54) **Klimatisierungssystem für Freizeitmobile**
Air-conditioning system for a recreational vehicle
Dispositif de climatisation de véhicule de loisir

(30) Priorität: 04.08.2004 DE 102004037862
(43) Veröffentlichungstag der Anmeldung: 08.02.2006
(73) Patentinhaber: Truma Gerätetechnik GmbH & Co. KG, 85640 Putzbrunn (DE)
(72) Erfinder: Volkwein, Thomas, 85652 Pliening (DE); Achatz, Dieter, 81673 München (DE)
(74) Vertreter: Müller - Hoffmann & Partner

(56) Entgegenhaltungen:
- EP-A2- 1 350 645
- DE-A- 4 303 478
- DE-A1- 19 629 972
- US-A- 5 478 274

## Beschreibung

Die Erfindung betrifft ein Klimatisierungssystem für einen zu klimatisierenden Raum in einem Freizeitmobil.

Unter dem Begriff "Freizeitmobil" sind im Sinne der Erfindung mobile Freizeiteinrichtungen zu verstehen, wie z. B. Reisemobile, Wohnwagen oder Boote.

Es ist bekannt, für die Klimatisierung von Freizeitmobilen getrennte Vorrichtungen zur Heizung und Kühlung vorzusehen. Dabei haben sich vor allem im Caravanbereich Flüssiggasheizungen bewährt, während für die Kühlung und gegebenenfalls Entfeuchtung Kompressorkühlgeräte besonders geeignet sind. Bei Geräten zur Raumluftkühlung können zusätzlich elektrische Heizstäbe vorgesehen sein, so dass die Geräte nicht nur zum Kühlen, sondern auch zum Heizen des Raumes geeignet sind. Ebenfalls ist es bekannt, die Kühlvorrichtungen in einer Wärmepumpenbetriebsart zu betreiben, bei der der Umgebung Wärme entzogen und zum Heizen der Raumluft verwendet wird. Zum Betreiben der Heizstäbe bzw. der Kühlvorrichtung im Wärmepumpenbetrieb ist ein elektrischer Strom in einer Leistungsklasse erforderlich, die meist nur an entsprechend abgesicherten Stellplätzen zur Verfügung steht. Sofern dieser Strom nicht bereitgestellt werden kann, ist daher ein Heizungsbetrieb ausgeschlossen.

Zudem arbeiten die genannten Kühlvorrichtungen sowohl im Kühl- als auch im Heizbetrieb mit einem identischen Raumluftkreislauf. Beispielsweise wird bei Dachklimageräten auch im Heizbetrieb die Luft an der Raumdecke angesaugt und nach Erwärmung dort wieder ausgeblasen, was für eine komfortable Heizung ungeeignet ist.

Dementsprechend ist es für die Komplettklimatisierung eines Freizeitmobils erforderlich, zwei getrennte Geräte für Heizung und Kühlung vorzusehen, was mit hohem Einbauaufwand, Platzbedarf und Kosten verbunden ist.

In der US-A-5478274 wird ein Klimatisierungssystem mit einer Heizungsvorrichtung und einer Kühlvorrichtung beschrieben. In der Heizungsvorrichtung ist ein Wärmetauscher vorgesehen, der durch die Abwärme eines Antriebsmotors gespeist wird. Weiterhin sind zwei Elektroheizer vorgesehen. Der Luftstrom kann durch die Heizungsvorrichtung und danach durch die Kühlvorrichtung geführt werden. Ein ähnliches System ist in der EP-A2-1350645 beschrieben.

Aus der DE 43 03 478 A1 ist ein Klimatisierungssystem für einen Fahrgastraum in einem Kraftfahrzeug bekannt, das eine Heizungsvorrichtung und eine Kühlvorrichtung aufweist. Der die Heizungsvorrichtung durchströmende Luftstrom ist wahlweise über einen Kanal einem Sorptionsreaktor der Kühlvorrichtung oder dem Fahrgastraum zuführbar.

Der Erfindung liegt die Aufgabe zugrunde, ein Klimatisierungssystem für ein Freizeitmobil anzugeben, das eine komfortable Heizung und Kühlung bei reduziertem Platzbedarf und vermindertem Kostenaufwand ermöglicht.

Die Aufgabe wird erfindungsgemäß durch ein Klimatisierungssystem nach Patentanspruch 1 gelöst. Vorteilhafte Weiterentwicklungen sind den abhängigen Ansprüchen zu entnehmen.

Ein erfindungsgemäßes Klimatisierungssystem für einen zu klimatisierenden Raum in einem Freizeitmobil weist eine Heizungsvorrichtung zum Erwärmen von aus dem Raum zugeführter Luft, eine Kühlvorrichtung zum Kühlen der Luft und eine Innenluftführung zum Zuführen der Luft aus dem zu klimatisierenden Raum, Durchführen der Luft durch die Heizungsvorrichtung und/oder die Kühlvorrichtung und Rückführen der Luft in den Raum auf. Die Innenluftführung weist einen mit dem Raum verbundenen Lufteinlass, einen zu dem Raum führenden Warmluftauslass und einen zu dem Raum führenden Kaltluftauslass auf. Weiterhin ist in der Innenluftführung eine Umschaltvorrichtung vorgesehen, mit der Luftführungswege in dem Klimatisierungssystem derart einstellbar sind, dass die Luft von dem Lufteinlass wahlweise entweder nur durch die Heizungsvorrichtung oder durch die Heizungsvorrichtung und die Kühlvorrichtung führbar ist.

Bei dem erfindungsgemäßen Klimatisierungssystem nutzen somit die Heizungsvorrichtung und die Kühlvorrichtung zumindest teilweise gemeinsam Teile der Innenluftführung, wodurch bereits ein erheblicher Aufwand gespart werden kann. So kann z. B. die Luft - unabhängig davon, ob sie erwärmt oder gekühlt werden soll - über einen gemeinsamen Lufteinlass in das Klimatisierungssystem gelangen. Für den Auslass der Luft ist es jedoch aus Komfortgründen besonders vorteilhaft, wenn ein Warmluftauslass und ein Kaltluftauslass separat vorgesehen sind, weil dann die Luft je nach Erwärmungszustand z. B. im Bodenbereich (für Warmluft) oder im Deckenbereich (für Kaltluft) ausgelassen werden kann, um eine möglichst gleichmäßige Klimatisierung des Raums zu erreichen.

Die Umschaltvorrichtung ermöglicht es, die Luftwege im Inneren des Klimatisierungssystems in geeigneter Weise einzustellen. So kann die Luft z. B. entweder nur über die Heizungsvorrichtung oder nur über die Kühlvorrichtung oder auch sowohl über die Heizungsvorrichtung als auch über die Kühlvorrichtung geführt werden.

Besonders vorteilhaft ist es jedoch, dass die Luft zu einer der Heizungs- oder Kühlvorrichtung geführt werden kann und dabei vorher die andere Vorrichtung durchströmt, die jedoch abgeschaltet ist. Da diese Vorrichtung in diesem Betriebszustand somit nicht zur Erwärmung oder Kühlung der Luft beiträgt, können vorteilhaft die bestehenden Luftführungswege genutzt werden, ohne dass zusätzliche, getrennte Luftwege bereitgestellt werden müssen.

So ist z. B. bei einer besonders vorteilhaften Ausführungsform der Erfindung stromab von dem Lufteinlass in der Innenluftführung die Heizungsvorrichtung angeordnet, der wiederum stromab von der Heizungsvorrichtung in der Innenluftführung eine zu der Umschaltvorrichtung gehörende erste Umschalteinrichtung nachgeordnet ist. Durch die erste Umschalteinrichtung kann die Luft wahlweise zu dem Warmluftauslass oder zu der Kühlvorrichtung geführt werden, von der stromab der Kaltluftauslass vorgesehen ist.

Somit kann in einem Heizbetriebszustand die Luft über die Heizungsvorrichtung und dann durch die erste Umschalteinrichtung zu dem Warmluftauslass geführt werden.

Alternativ dazu kann in einem Kühlbetriebszustand die Luft durch die erste Umschalteinrichtung zu der Kühlvorrichtung und dort z. B. zu einem in dem Kühlbetriebszustand zum Kühlen der Luft dienenden ersten Wärmetauscher geführt werden. Die Luft durchströmt dann zwar vor der Kühlvorrichtung die Heizungsvorrichtung, die jedoch nicht in Betrieb ist und daher die Luft nicht erwärmt. Zum Zuführen der Luft zu der Kühlvorrichtung nutzt die Luft somit zunächst die gleichen Luftwege wie im Heizbetrieb. Erst durch die erste Umschalteinrichtung wird der Luftweg so geändert, dass die Luft jetzt nicht zum Warmluftauslass, sondern über die Kühlvorrichtung zum Kaltluftauslass gelangen kann.

Bei einer besonders vorteilhaften Weiterentwicklung der Erfindung ist stromab von dem ersten Wärmetauscher und stromauf von dem Kaltluftauslass eine zu der Umschaltvorrichtung gehörende zweite Umschalteinrichtung vorgesehen, zum wahlweisen Führen der Luft von dem ersten Wärmetauscher zu dem Kaltluftauslass oder zu dem Warmluftauslass. Im Kühlbetrieb lässt sich dann die von der Kühlvorrichtung gekühlte Luft über den Kaltluftauslass in den Raum zurückführen. Wenn gewünscht, kann jedoch bei entsprechender Stellung der Umschalteinrichtung die Kaltluft auch über den Warmluftauslass abgeführt werden. Besonders zweckmäßig ist diese Art der Luftführung in einem Entfeuchtungsbetriebszustand, in dem die Heizungsvorrichtung und die Kühlvorrichtung gemeinsam betrieben werden. Die Luft wird dann zunächst durch die Heizungsvorrichtung erwärmt und anschließend von der Kühlvorrichtung wieder abgekühlt, wodurch eine Entfeuchtung der Luft möglich ist. Die Luft kann dementsprechend durch die erste Umschalteinrichtung zu dem ersten Wärmetauscher der Kühlvorrichtung und danach durch die zweite Umschalteinrichtung zu dem Warmluftauslass geführt werden.

Bei einer anderen, besonders vorteilhaften Weiterentwicklung der Erfindung ist die Kühlvorrichtung in einem Wärmepumpenbetriebszustand betreibbar, so dass Wärme aus der in der Umgebung des zu klimatisierenden Raums vorhandenen-Luft auf die von der Innenluftführung geführte Raumluft übertragen wird. Auf diese Weise kann die Kühlvorrichtung auch als Heizung benutzt werden, so dass - z. B. nur für den kurzfristigen Betrieb oder bei nur geringem Wärmeleistungsbedarf - die eigentliche Heizungsvorrichtung nicht in Betrieb genommen werden muss.

Für diesen Zweck weist die Kühlvorrichtung in an sich bekannter Weise einen Kältemittelkreislauf zwischen dem ersten Wärmetauscher und einem von der Umgebungsluft angeströmten zweiten Wärmetauscher auf. Der Kältemittelkreislauf ist derart veränderbar bzw. umschaltbar, dass die Kühlvorrichtung in dem Wärmepumpenbetriebszustand als Wärmepumpe arbeitet und der erste Wärmetauscher zum Erwärmen der Luft für den Raum dient. Der Wärmestrom in der Kühlvorrichtung wird somit umgekehrt.

Vorzugsweise wird die Heizungsvorrichtung in dem Wärmepumpenbetriebszustand nicht betrieben. Die Luft ist durch die erste Umschalteinrichtung zu dem ersten Wärmetauscher und durch die zweite Umschalteinrichtung zu dem Warmluftauslass führbar, um die von der jetzt als Wärmepumpe arbeitenden Kühlvorrichtung erwärmte Luft in komfortabler Weise in den Raum, z. B. in dessen Bodenbereich, zu leiten.

Alternativ dazu kann die Heizungsvorrichtung auch in dem Wärmepumpenbetriebszustand der Kühlvorrichtung mitbetrieben werden, wodurch eine zweifache Erwärmung der Luft - zunächst durch die Heizungsvorrichtung und dann durch die als Wärmepumpe arbeitende Kühlvorrichtung - möglich ist.

Zur Unterstützung des Raumluftstroms ist eine Gebläseeinrichtung in der Innenluftführung vorgesehen, die vorzugsweise stromab von der Heizungsvorrichtung vor der ersten Umschalteinrichtung angeordnet ist.

Besonders vorteilhaft ist es, wenn die Heizungsvorrichtung eine Brennstoffheizung, insbesondere eine Flüssiggasheizung aufweist.

Die Kühlvorrichtung kann vorzugsweise ein Kompressorkühlaggregat aufweisen.

Bei einer besonders vorteilhaften Ausgestaltung der Erfindung sind die Heizungsvorrichtung und die Kühlvorrichtung zu einer Baueinheit zusammengefasst und in einem gemeinsamen Gehäuse untergebracht. Beim Einbau des Klimatisierungssystems lässt sich die Einheit mit erheblich geringerem Aufwand installieren, als dies bisher bei zwei getrennten Vorrichtungen erforderlich war.

Weiterhin kann es besonders vorteilhaft sein, die Funktionen des Klimatisierungssystems über eine einzige Bedienungseinheit zu steuern. Dementsprechend kann die Gesamtzahl von Bedienungselementen, aber auch z. B. der Aufwand zur Spannungsversorgung etc. reduziert werden, ohne dass dadurch der Bedienungskomfort beeinträchtigt wird.

Vorzugsweise ist eine Steuerung vorgesehen, die zum Ein- und Ausschalten der Heizungsvorrichtung und der Kühlvorrichtung sowie zum Einstellen der ersten und der zweiten Umschalteinrichtung und gegebenenfalls zum Umschalten der Kühlvorrichtung für den Kältebetrieb und den Wärmepumpenbetrieb ausgebildet ist. Idealerweise kann die Steuerung dabei zum automatischen Steuern der Funktionen des Klimatisierungssystems in Abhängigkeit von einem Temperatur-und/oder Luftfeuchtigkeitswunsch des Bedieners ausgebildet sein. Selbstverständlich kann hierbei auch der Istzustand der Luft in dem zu klimatisierenden Raum berücksichtigt werden.

Das Klimatisierungssystem kann besonders vorteilhaft z. B. in einem Freizeitmobil in einen Einbauort eingebaut werden, der üblicherweise allein für eine Gasheizung vorgesehen ist. Dabei ist es möglich, die Komponenten des Klimatisierungssystems derart anzuordnen, dass die Gasheizung den für sie üblicherweise vorgesehenen Platz einnimmt, während die weiteren Komponenten, wie z. B. die Kühlvorrichtung und die Umschaltvorrichtung dahinter, in dem ansonsten ungenutzten Raum zwischen Gasheizung und Fahrzeugwand platziert werden.

Diese und weitere Vorteile und Merkmale der Erfindung werden nachfolgend anhand von Beispielen unter Zuhilfenahme der begleitenden Figuren näher erläutert. Es zeigen:
- **Fig. 1**: einen schematischen Schnitt durch ein erfindungsgemäßes Klimatisierungssystem im Heizbetrieb;
- **Fig. 2**: das Klimatisierungssystem von Fig. 1 im Kühlbetrieb;
- **Fig. 3**: das Klimatisierungssystem im Wärmepumpenbetriebszustand; und
- **Fig. 4**: das Klimatisierungssystem im Entfeuchtungsbetriebszustand.

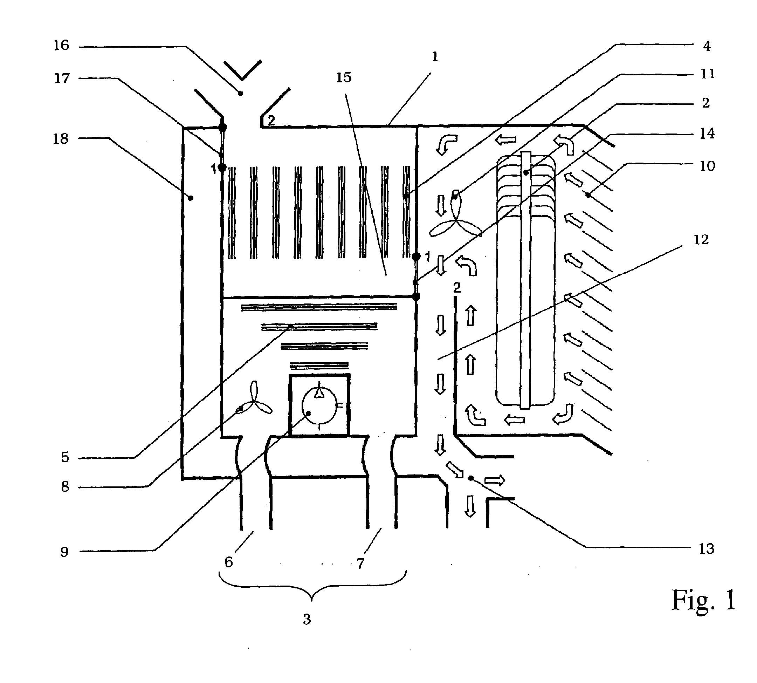

Fig. 1 zeigt das Klimatisierungssystem in schematischer Schnittdarstellung, wobei sich der Schnitt senkrecht zu einer in Fig. 1 links von dem Klimatisierungssystem befindlichen Wand des Freizeitmobils, z. B. eines Wohnwagens, befindet. In Fig. 1 rechts von dem Klimatisierungssystem liegt der zu klimatisierende Raum.

In dem Gehäuse 1 ist eine als Heizungsvorrichtung dienende Gasheizung 2, z. B. eine mit Propangas betriebene Flüssiggasheizung, untergebracht. Derartige Heizungen sind vielfältig bekannt. Sie weisen z. B. einen atmosphärischen Gasbrenner auf, dessen heiße Rauchgase durch einen Rauchgaskanal geführt werden. Der Rauchgaskanal ist von einem Wärmetauscher umgeben, der in Fig. 1 in wesentlichen Zügen erkennbar ist und die Heizungsvorrichtung 2 repräsentiert. Der Wärmetauscher weist mehrere Rippen auf, die von der zu erwärmenden Luft umströmt werden.

Weiterhin ist in dem Gehäuse 1 eine nur schematisch dargestellte Kühlvorrichtung 3, nämlich ein Kühlaggregat bzw. eine Klimaanlage eingebaut.

Die Kühlvorrichtung 3 weist einen ersten Wärmetauscher 4 und einen zweiten Wärmetauscher 5 auf, die durch einen nicht dargestellten, jedoch an sich vielfach bekannten Kältemittelkreislauf miteinander verbunden sind.

Der erste Wärmetauscher 4 dient im Kühlbetrieb als Verdampfer, während der zweite Wärmetauscher 5 als Verflüssiger eingesetzt wird.

Dem zweiten Wärmetauscher 5 wird Luft aus der Umgebung über einen Umgebungslufteinlass 6 zugeführt, die nach Durchströmen des zweiten Wärmetauschers 5 über einen Umgebungsluftauslass 7 wieder nach außen abgeführt werden kann. Der Umgebungslufteinlass 6 und der Umgebungsluftauslass 7 können z. B. den Boden eines Wohnmobils durchdringen.

Zur Unterstützung der Luftströmung durch den zweiten Wärmetauscher 5 ist ein Verflüssigergebläse 8 vorgesehen.

In dem Kältemittelkreislauf ist auch in bekannter Weise ein Verdichter 9 angeordnet, der das Kältemittel verdichtet, bevor es in dem als Verflüssiger dienenden zweiten Wärmetauscher 5 durch die Umgebungsluft gekühlt wird.

Das Kältemittel wird dann zu dem als Verdampfer dienenden ersten Wärmetauscher 4 gepumpt und dort, z. B. über eine nicht dargestellte Drossel, entspannt, so dass an dem ersten Wärmetauscher 4 die gewünschte Kühlwirkung eintritt.

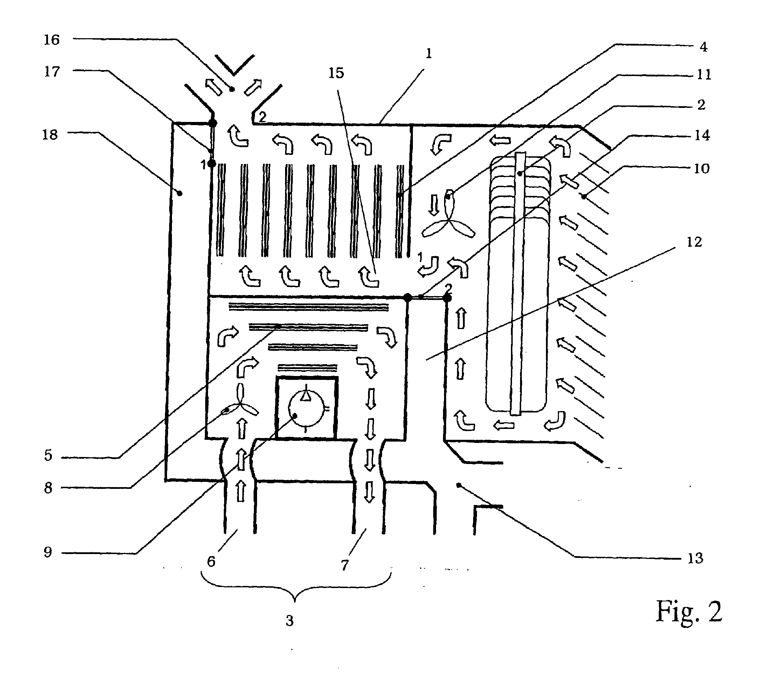

Die weitere Funktionsweise wird später anhand von Fig. 2 näher erläutert.

In Fig. 1 wird hingegen der Heizbetrieb dargestellt wie nachfolgend beschrieben.

Die Luft aus dem zu klimatisierenden Raum wird über einen z. B. lamellenförmig ausgebildeten Raumlufteinlass 10 mit Hilfe eines stromab von dem Wärmetauscher der Gasheizung 2 angeordneten Gebläses 11 eingesaugt und an dem Wärmetauscher der Gasheizung 2 vorbeigeführt. Dadurch erwärmt sich die Luft und wird durch das Gebläse 11 durch einen Warmluftkanal 12 zu einem Warmluftauslass 13 geführt.

Die Lamellen des Raumlufteinlasses 10 können sich in einer Geräteverkleidung an der vom Raum aus zugänglichen Vorderseite des Klimatisierungssystems befinden.

An den Warmluftauslass 13 können sich zu einem vorzugsweise im unteren Bereich des zu beheizenden Raumes vorhandenen Warmluftsystem gehörende Rohrleitungssysteme anschließen, die die Warmluft in der gewünschten Weise im Inneren des Freizeitmobils verteilen.

Fig. 2 zeigt das erfindungsgemäße Klimatisierungssystem im Kühlbetrieb.

Auch hier wird die Raumluft durch das Gebläse 11 über den Raumlufteinlass 10 in das Innere des Gehäuses 1 eingesaugt. Dabei umströmt die Raumluft den Wärmetauscher der Gasheizung 2. Da jedoch die Gasheizung im Kühlbetrieb nicht eingeschaltet ist, wird die Luft nicht erwärmt.

Dem Gebläse 11 ist eine als erste Umschalteinrichung dienende erste Klappe 14 nachgeordnet. Ein Vergleich der Fig. 1 und 2 zeigt, wie die Stellung geändert wurde. In Fig. 1 steht die erste Klappe 14 in Stellung 1 und gibt dadurch den Warmluftkanal 12 frei. In der Fig. 2 jedoch steht die erste Klappe 14 in der Stellung 2 und verschließt dadurch den Warmluftkanal 12, während sie einen Verbindungskanal 15 zum ersten Wärmetauscher 4 der Kühlvorrichtung 3 öffnet.

Dadurch kann die Luft den ersten Wärmetauscher 4 durchströmen, so dass sie gekühlt wird. Anschließend gelangt die Kaltluft zu einem Kaltluftauslass 16 und kann von dort über geeignete Rohrleitungssysteme vorzugsweise zu der Decke des zu kühlenden Raumes geführt und dort in den Raum ausgelassen werden.

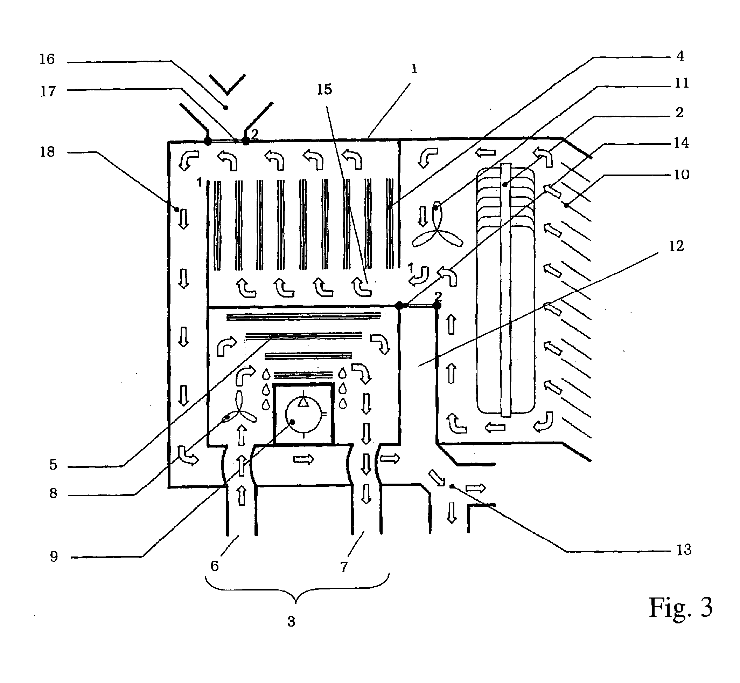

Fig. 3 zeigt das Klimatisierungssystem in einem Wärmepumpenbetriebszustand.

Wie in dem in Fig. 2 gezeigten Kühlbetriebszustand wird die Luft zunächst von dem Gebläse 11 an der nicht in Betrieb befindlichen Gasheizung 2 vorbeigeführt und - da die erste Klappe 14 in Stellung 2 steht - über den Verbindungskanal zu dem ersten Wärmetauscher 4 der Kühlvorrichtung 3 geleitet.

Die Kühlvorrichtung 3 arbeitet jetzt allerdings - im Unterschied zum Kühlbetriebszustand - als Wärmepumpe. Das bedeutet, dass der Kältemittelfluss in der Kühlvorrichtung 3 derart umgekehrt ist, dass der erste Wärmetauscher 4 und der zweite Wärmetauscher 5 ihre Funktionen vertauscht haben. Der erste Wärmetauscher 4 arbeitet jetzt als Verflüssiger, während der zweite Wärmetauscher 5 als Verdampfer dient.

Dementsprechend entzieht der zweite Wärmetauscher 5 der ihn durchströmenden Umgebungsluft Wärme, die über den ersten Wärmetauscher 4 an die ihn durchströmende Raumluft abgegeben werden kann.

Dem ersten Wärmetauscher 4 ist eine als zweite Umschalteinrichtung dienende zweite Klappe 17 nachgeordnet. Während die zweite Klappe 17 in dem in Fig. 2 gezeigten Kühlbetrieb in Stellung 1 steht, so dass die Kaltluft zu dem Kaltluftauslass 16 gelangen kann, ist die zweite Klappe 17 im in Fig. 3 gezeigten Wärmepumpenbetriebszustand in Stellung 2 geschaltet und verschließt dadurch den Kaltluftauslass 16. Gleichzeitig öffnet die zweite Klappe 17 einen Bypass 18, der schließlich zu dem Warmluftauslass 13 führt. Die von dem ersten Wärmetauscher 4 im Wärmepumpenbetriebszustand erwärmte Luft kann somit über den Warmluftauslass 13 in den Raum rückgeführt werden.

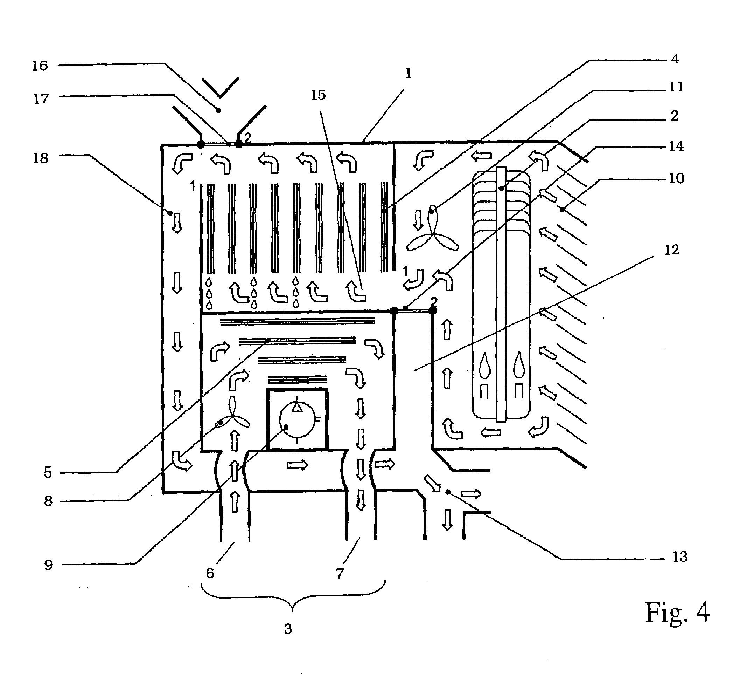

Fig. 4 zeigt das Klimatisierungssystem in einem Entfeuchtungsbetriebszustand.

Jetzt befindet sich die Gasheizung 2 im Betrieb und erwärmt über ihren Wärmetauscher die von dem Gebläse 11 angesaugte Raumluft.

Die erwärmte Luft wird dann dadurch, dass die erste Klappe 14 in Stellung 2 steht, zu dem ersten Wärmetauscher 4 der jetzt im Kühlbetriebszustand arbeitenden Kühlvorrichtung 3 geleitet. Dadurch wird die Warmluft wieder abgekühlt und gleichzeitig entfeuchtet. Die Wärmeleistungen der Heizungsvorrichtung 2 und der Kühlvorrichtung 3 sollten in diesem Fall derart aufeinander abgestimmt sein, dass der Luftstrom in der Summe eine Erwärmung und Entfeuchtung erfährt. Es ist aber auch möglich, die Wärmeleistungen so abzustimmen, dass der Luftstrom das Klimatisierungsgerät im Wesentlichen mit Raumtemperatur, also ohne nennenswerte Erwärmung, verlässt. Die dabei erreichte Entfeuchtung des Luftstroms genügt oft, um ein angenehmes Raumklima zu erhalten. Die entfeuchtete und gegebenenfalls temperierte Luft gelangt über die sich in Stellung 2 befindliche zweite Klappe 17 und den Bypass 18 zum Warmluftauslass 13.

### Das erfindungsgemäße Klimatisierungsgerät weist eine Reihe von Vorteilen auf:

Durch die mittels der Luftklappen 14, 17 manuell oder mit Servounterstützung umschaltbaren Innenluftkreisläufe lässt sich ein zusätzliches Umluftgebläse einsparen. Das Gebläse 11 reicht für alle Anwendungsfälle aus, eine Luftströmung durch das Klimatisierungssystem zu führen. Da das Gebläse 11 eine für den Kühlbetriebszustand ausreichende Leistung aufweisen muss, ist es relativ stark dimensioniert, was wiederum im Heizbetriebszustand vorteilhaft genutzt werden kann.

Durch die Integration zweier Module (Heizungsmodul, Kältemodul) in einem gemeinsamen Gehäuse ergeben sich für die Einzelkomponenten weitere Integrationsmöglichkeiten. Außerdem ist nur ein Gehäuse 1 erforderlich, was Gewicht und Kosten spart.

Die gesamte Einheit kann z. B. in einem Schrank eines Reisemobils eingebaut werden, der vom Hersteller für den Einbau von lediglich einer Gasheizung vorgesehen ist. Üblicherweise befindet sich jedoch in dem Einbauraum hinter der Gasheizung noch bisher ungenutzter Platz, der jetzt von der Kühlvorrichtung 3 belegt werden kann.

Die Bedienung des Klimatisierungssystems kann über ein einziges Bedienteil erfolgen. Außerdem kann eine einheitliche Zentralsteuerung vorgesehen werden, die das korrekte Zusammenspiel der Einzelkomponenten sicherstellt. Dabei ist es auch möglich, dass die Steuerung jeweils automatisch die optimale Betriebsart (z. B. Wärmepumpenbetriebszustand oder Heizbetriebszustand), je nach Außenluftbedingungen und Klimatisierungswunsch des Kunden wählt, um das System optimal zu betreiben. Um die Steuerung zu automatisieren, ist es zweckmäßig, dass die Steuerung auch die beiden Klappen 14, 17 direkt ansteuern und umschalten kann. In diesem Fall sollten die Klappen z. B. elektromotorisch oder - magnetisch betätigbar sein. Der Bediener hat die Möglichkeit, einen Temperaturwunsch oder auch einen Feuchtigkeitswunsch vorzugeben. Zum Beispiel kann er - unabhängig von der Temperatur - angeben, dass die Luft entfeuchtet werden soll.

## Patentansprüche

1. Klimatisierungssystem für einen zu klimatisierenden Raum in einem Freizeitmobil, mit
- einer Heizungsvorrichtung (2) zum Erwärmen von aus dem Raum zugeführter Luft,
- einer Kühlvorrichtung (3) zum Kühlen der Luft; und mit
- einer Innenluftführung zum Zuführen der Luft aus dem zu klimatisierenden Raum, Durchführen der Luft durch die Heizungsvorrichtung (2) und/oder die Kühlvorrichtung (3) und Rückführen der Luft in den Raum;
wobei
- die Innenluftführung einen mit dem Raum verbundenen Lufteinlass (10), einen zu dem Raum führenden Warmluftauslass (13) und einen zu dem Raum führenden Kaltluftauslass (16) aufweist;
- die Innenluftführung eine Umschaltvorrichtung (14, 17) aufweist, mit der Luftführungswege in dem Klimatisierungssystem derart einstellbar sind, dass die Luft von dem Lufteinlass (10) wahlweise durch die Heizungsvorrichtung (2) oder durch die Heizungsvorrichtung (2) und die Kühlvorrichtung (3) führbar ist;
- die Luft wahlweise über den Warmluftauslass (13) oder über den Kaltluftauslass (16) in den Raum rückführbar ist;
- stromab von dem Lufteinlass (10) in der Innenluftführung die Heizungsvorrichtung (2) angeordnet ist;
- stromab von der Heizungsvorrichtung (2) in der Innenluftführung eine zu der Umschaltvorrichtung gehörende erste Umschalteinrichtung (14) vorgesehen ist;
- durch die erste Umschalteinrichtung (14) die Luft wahlweise zu dem Warmluftauslass (13) oder zu der Kühlvorrichtung (3) führbar ist;
- stromab von der Kühlvorrichtung (3) der Kaltluftauslass (16) vorgesehen ist;
- die Kühlvorrichtung (3) einen zum Kühlen der Luft dienenden ersten Wärmetauscher (4) aufweist, **dadurch gekennzeichnet, dass** die Heizungsvorrichtung (2) eine Brennstoffheizung, insbesondere eine Flüssiggasheizung aufweist; und
- stromab von dem ersten Wärmetauscher (4) und stromauf von dem Kaltluftauslass (16) eine zu der Umschaltvorrichtung gehörende zweite Umschalteinrichtung (17) vorgesehen ist, zum wahlweisen Führen der Luft von dem ersten Wärmetauscher (4) zu dem Kaltluftauslass (16) oder zu dem Warmluftauslass (13); und wobei
- in einem Entfeuchtungsbetriebszustand
+ die Heizungsvorrichtung (2) und die Kühlvorrichtung (3) betrieben werden; und
+ die Luft durch die erste Umschalteinrichtung (14) zu dem ersten Wärmetauscher (4) und durch die zweite Umschalteinrichtung (17) zu dem Warmluftauslass (13) führbar ist.

2. Klimatisierungssystem nach Anspruch 1, **dadurch gekennzeichnet, dass** in einem Heizbetriebszustand die Luft durch die erste Umschalteinrichtung (14) zu dem Warmluftauslass (13) führbar ist.

3. Klimatisierungssystem nach Anspruch 1 oder 2, **dadurch gekennzeichnet, dass** in einem Kühlbetriebszustand die Luft durch die erste Umschalteinrichtung (14) zu einem in dem Kühlbetriebszustand zum Kühlen der Luft dienenden ersten Wärmetauscher (4) der Kühlvorrichtung (3) führbar ist.

4. Klimatisierungssystem nach einem der Ansprüche 1 bis 3, **dadurch gekennzeichnet, dass** die Kühlvorrichtung (3) in einem Wärmepumpenbetriebszustand betreibbar ist, zum Übertragen von Wärme aus einer Umgebungsluft auf die von der Innenluftführung geführte Luft.

5. Klimatisierungssystem nach Anspruch 4, **dadurch gekennzeichnet, dass**
- die Kühlvorrichtung (3) einen Kältemittelkreislauf zwischen einem ersten Wärmetauscher (4) und einem von der Umgebungsluft angeströmten zweiten Wärmetauscher (5) aufweist; und dass
- der Kältemittelkreislauf derart veränderbar ist, dass die Kühlvorrichtung (3) in dem Wärmpumpenbetriebszustand als Wärmepumpe arbeitet und der erste Wärmetauscher (4) zum Erwärmen der Luft für den Raum dient.

6. Klimatisierungssystem nach Anspruch 5, **dadurch gekennzeichnet, dass** in dem Wärmepumpenbetriebszustand
- die Heizungsvorrichtung (2) nicht betrieben wird; und
- die Luft durch die erste Umschalteinrichtung (14) zu dem ersten Wärmetauscher (4) und durch die zweite Umschalteinrichtung (17) zu dem Warmluftauslass (13) führbar ist.

7. Klimatisierungssystem nach einem der Ansprüche 1 bis 6, **dadurch gekennzeichnet, dass** in der Innenluftführung eine Gebläseeinrichtung (11) zum Erzeugen eines Luftstroms durch die Innenluftführung vorgesehen ist.

8. Klimatisierungssystem nach einem der Ansprüche 1 bis 7, **dadurch gekennzeichnet, dass** die Kühlvorrichtung (3) ein Kompressorkühlaggregat aufweist.

9. Klimatisierungssystem nach einem der Ansprüche 1 bis 8, **dadurch gekennzeichnet, dass** die Heizungsvorrichtung (2) und die Kühlvorrichtung (3) zu einer Baueinheit zusammengefasst sind.

10. Klimatisierungssystem nach einem der Ansprüche 1 bis 9, **dadurch gekennzeichnet, dass** die Heizungsvorrichtung (2) und die Kühlvorrichtung (3) in einem gemeinsamen Gehäuse (1) untergebracht sind.

11. Klimatisierungssystem nach einem der Ansprüche 1 bis 10, **dadurch gekennzeichnet, dass** die Funktionen des Klimatisierungssystems über eine einzige Bedienungseinheit steuerbar sind.

12. Klimatisierungssystem nach einem der Ansprüche 1 bis 11, **dadurch gekennzeichnet, dass** eine Steuerung vorgesehen ist, zum
- Ein- und Ausschalten der Heizungsvorrichtung (2) ;
- Ein- und Ausschalten der Kühlvorrichtung (3) ;
- Einstellen der ersten und der zweiten Umschalteinrichtung (14, 17);
- Einstellen der Kühlvorrichtung (3) für den Kältebetrieb und den Wärmepumpenbetrieb.

13. Klimatisierungssystem nach Anspruch 12, **dadurch gekennzeichnet, dass** die Steuerung ausgebildet ist zum automatischen Steuern der Funktionen des Klimatisierungssystems in Abhängigkeit von einer Temperatur- und/oder Luftfeuchtigkeitsvorgabe eines Bedieners.

14. Freizeitmobil mit einem für eine Gasheizung vorgesehenen Einbauort, **dadurch gekennzeichnet, dass** in dem Einbauort ein Klimatisierungssystem nach einem der Ansprüche 1 bis 13 eingebaut ist.

15. Freizeitmobil nach Anspruch 14, **dadurch gekennzeichnet, dass** die Kühlvorrichtung (3), bezogen auf eine dem zu klimatisierenden Raum zugewandte, den Lufteinlass aufweisende Vorderseite des Klimatisierungssystems, hinter der Heizungsvorrichtung (2) angeordnet ist.

## Claims

1. Air conditioning system for use in a room in a leisure facility, comprising:
- a heating device (2) for heating air ducted out of a room, with the heating device (2) heated by a fuel, in particular a liquid gas fuel, and
- a cooling device (3) to cool the air, and
- an internal air ducting system to convey the air out of the a being air conditioned, ducting the air through the heating device (2) and/or the cooling device (3) and returning the air into a room,
whereby
- the internal air ducting system comprises an air inlet (10) connecting with the room, a warm air outlet (13) and a cold air outlet (16) leading into the room;
- the internal air ducting system contains a switching device (14, 17), by means of which air ducting paths in the air conditioning system can be controlled in such a manner that the air from the air inlet (10) can be conducted through the heating device (2) or through the heating device (2) and the cooling device (3).
- the air can be ducted back into the room either through the warm air outlet (13) or through the cold air outlet (16),
- the heating device (2) is arranged downstream from the air inlet (10) in the internal air ducting system;
- a first switching device (14), which belongs to the switching device, is provided downstream from the heating device;
- by means of this first switching device (14) the air can be ducted either to the warm air outlet (13) or to the cooling device (3);
- the cold air outlet (16) is located downstream of the cooling device (3);
- the cooling device (3) has an first heat exchanger (4) for the purpose of cooling the air, **characterised in that**
- downstream of the first heat exchanger (4) and upstream of the cold air outlet (16) a second switching device (17) that belongs to the switching system is provided, for the purpose of conducting the air from the first heat exchanger (4) to the cold air outlet (16) or to the hot air outlet (13), and whereby
- in a dehumidifying operating mode:
+ the heating device (2) and the cooling device (3) are operated; and
+ the air can be conveyed through the first switching device 14 to the first heat exchanger (4) and through the second switching device (17) to the hot air outlet (13).

2. Air conditioning system in accordance with claim 1, **characterised in that**, when heating, the air can be conveyed through the first switching device (14) to the hot air outlet (13).

3. Air conditioning system in accordance with claim 1 or Claim 2 above, **characterised in that**, when cooling, the air can be conveyed through the first switching device (14) to a first heat exchanger (4) of the cooling device (3) which serves to cool the air.

4. Air conditioning system in accordance with any of the above Claims 1 to 3, **characterised in that** the cooling device (3) can be operated in a heating pump operating mode in order to transfer heat from the ambient air to the air ducted by the internal air ducting system.

5. Air conditioning system in accordance with Claim 4 above, **characterised in that**:
- the cooling device (3) comprises a cooling circuit between a first heat exchange (4) and a second heat exchange (5) that received a flow of ambient air, and that
- the cooling circuit can be varied in such a way that the cooling device (3) operates as a heat pump in the heat pump operating mode and the first heat exchanger (4) serves to heat the air for the room.

6. Air conditioning system in accordance with claim 5 above, **characterised in that** in the heat pump operating mode:
- the heating device (2) is not operated; and
- the air can be conveyed through the first switching device (14) to the first heat exchanger (4) and through the second switching device (17) to the warm air outlet (13).

7. Air conditioning system in accordance with any of the Claims 1 to 6 above, **characterised in that** a blower device (11) is provided in the internal air ducting system for the purpose of generating an airflow through the internal ducting system.

8. Air conditioning system in accordance with any of the Claims 1 to 7 above, **characterised in that** the cooling device (3) comprises a compressor cooling aggregate.

9. Air conditioning system in accordance with any of the Claims 1 to 8 above, **characterised in that** the heating device (2) and the cooling device (3) are combined to form a single structural unit.

10. Air conditioning system in accordance with any of the Claims 1 to 9 above, **characterised in that** the heating device (2) and the cooling device (3) are mounted in a common housing (1).

11. Air conditioning system in accordance with any of the Claims 1 to 10 above, **characterised in that** the functions of the air conditioning system can be controlled by means of a single control unit.

12. Air conditioning system in accordance with any of the Claims 1 to 11 above, **characterised in that** a control system is provided for the purpose of:
- switching the heating device (2) on and off;
- switching the cooling device (3) on and off;
- adjusting the first and the second switching devices (14, 17)
- adjusting the cooling device (3) for the cooling operation and the heat pump operation.

13. Air conditioning system in accordance with Claim 12 above, **characterised in that** the control system is designed in such a way that the functioning of the air conditioning system is automatically controlled in relation to the temperature or air humidity settings chosen by the user.

14. Leisure facility with an installation site for a gas heating system, **characterised in that** an air conditioning system in accordance Claims 1 to 13 above is incorporated in this installation site.

15. Leisure facility in accordance with Claim 14 above, **characterised in that** the cooling device (3) is arranged behind the heating device (2) in relation to the front side of the air conditioning system comprising the ain inlet and facing the room to be air conditioned.

## Revendications

1. Système de climatisation pour un espace à climatiser dans un véhicule de loisir, avec
- un dispositif de chauffage (2) pour chauffer l'air provenant de l'espace,
- un dispositif de refroidissement (3) pour refroidir l'air ; et avec
- une ventilation interne pour laisser entrer l'air provenant de l'espace à climatiser, pour le faire passer dans le dispositif de chauffage (2) et/ou dans le dispositif de refroidissement (3) et pour le ramener dans l'espace ;
étant précisé que
- la ventilation interne comporte une entrée d'air (10) reliée à l'espace, une sortie d'air chaud (13) menant à l'espace, et une sortie d'air froid (16) menant à l'espace ;
- la ventilation interne comporte un sélecteur (14, 17) grâce auquel les conduites de ventilation prévues dans le système de climatisation sont réglables de telle sorte que l'air, à partir de l'entrée d'air (10), puisse traverser sélectivement le dispositif de chauffage (2) ou le dispositif de chauffage (2) et le dispositif de refroidissement (3) ;
- l'air est apte à être ramené dans l'espace sélectivement par la sortie d'air chaud (13) ou par la sortie d'air froid (16) ;
- en aval de l'entrée d'air (10) est prévu dans la ventilation interne le dispositif de chauffage (2) ;
- en aval du dispositif de chauffage (2) est prévu dans la ventilation interne un premier dispositif de sélection (14) qui fait partie du sélecteur ;
- l'air est apte à passer par le premier dispositif de sélection (14) sélectivement jusqu'à la sortie d'air chaud (13) ou au dispositif de refroidissement (3) ;
- en aval du dispositif de refroidissement (3) est prévue la sortie d'air froid (16) ;
- le dispositif de refroidissement (3) comporte un premier échangeur de chaleur (4) qui sert à refroidir l'air, **caractérisé en ce que**
- le dispositif de chauffage (2) comporte un chauffage à combustible, en particulier un chauffage à gaz liquide ; et
- en aval du premier échangeur de chaleur (4) et en amont de la sortie d'air froid (16) est prévu un second dispositif de sélection (17) qui fait partie du sélecteur, pour amener sélectivement l'air provenant du premier échangeur de chaleur (4) jusqu'à la sortie d'air froid (16) ou à la sortie d'air chaud (13) ; et étant précisé que
- dans un mode de déshumidification,
+ le dispositif de chauffage (2) et le dispositif de refroidissement (3) fonctionnent ; et
+ l'air est apte à passer par le premier dispositif de sélection (14) jusqu'au premier échangeur de chaleur (4), et par le second dispositif de sélection (17) jusqu'à la sortie d'air chaud (13).

2. Système de climatisation selon la revendication 1, **caractérisé en ce que** dans un mode de chauffage, l'air est apte à passer par le premier dispositif de sélection (14) jusqu'à la sortie d'air chaud (13).

3. Système de climatisation selon la revendication 1 ou 2, **caractérisé en ce que** dans un mode de refroidissement, l'air est apte à passer par le premier dispositif de sélection (14) jusqu'à un premier échangeur de chaleur (4) du dispositif de refroidissement (3), qui sert à refroidir l'air en mode de refroidissement.

4. Système de climatisation selon l'une des revendications 1 à 3, **caractérisé en ce que** le dispositif de refroidissement (3) est apte à fonctionner en mode de pompe à chaleur pour transférer la chaleur provenant d'un air ambiant dans l'air mis en circulation par la ventilation interne.

5. Système de climatisation selon la revendication 4, **caractérisé en ce que**
- le dispositif de refroidissement (3) comporte un circuit de réfrigérant entre un premier échangeur de chaleur (4) et un second échangeur de chaleur (5) sur lequel passe l'air ambiant ; et **en ce que**
- le circuit de réfrigérant est apte à être modifié de telle sorte que le dispositif de refroidissement (3) fonctionne comme une pompe à chaleur, en mode de pompe à chaleur, et que le premier échangeur de chaleur (4) serve à chauffer l'air pour l'espace.

6. Système de climatisation selon la revendication 5, **caractérisé en ce qu'**en mode de pompe à chaleur,
- le dispositif de chauffage (2) ne fonctionne pas ; et
- l'air est apte à passer par le premier dispositif de sélection (14) jusqu'au premier échangeur de chaleur (4), et par le second dispositif de sélection (17) jusqu'à la sortie d'air chaud (13).

7. Système de climatisation selon l'une des revendications 1 à 6, **caractérisé en ce qu'**il est prévu dans la ventilation interne un ventilateur (1) pour produire un écoulement d'air dans la ventilation interne.

8. Système de climatisation selon l'une des revendications 1 à 7, **caractérisé en ce que** le dispositif de refroidissement (3) comporte un refroidisseur à compresseur.

9. Système de climatisation selon l'une des revendications 1 à 8, **caractérisé en ce que** le dispositif de chauffage (2) et le dispositif de refroidissement (3) sont réunis pour former une unité de construction.

10. Système de climatisation selon l'une des revendications 1 à 9, **caractérisé en ce que** le dispositif de chauffage (2) et le dispositif de refroidissement (3) sont logés dans un carter commun (1).

11. Système de climatisation selon l'une des revendications 1 à 10, **caractérisé en ce que** les fonctions du système de climatisation sont aptes à être commandées par l'intermédiaire d'une seule unité de commande.

12. Système de climatisation selon l'une des revendications 1 à 11, **caractérisé en ce qu'**il est prévu une commande pour
- allumer et éteindre le dispositif de chauffage (2) ;
- allumer et éteindre le dispositif de refroidissement (3) ;
- régler les premier et second dispositifs de sélection (14, 17) ;
- régler le dispositif de refroidissement (3) pour le mode de refroidissement et pour le mode de pompe à chaleur.

13. Système de climatisation selon la revendication 12, **caractérisé en ce que** la commande est conçue pour commander automatiquement les fonctions du système de climatisation en fonction d'une température et/ou d'une humidité de l'air prédéfinies par un utilisateur.

14. Véhicule de loisir avec un emplacement de montage prévu pour un chauffage à gaz, **caractérisé en ce qu'**un système de climatisation selon l'une des revendications 1 à 13 est monté dans cet emplacement de montage.

15. Véhicule de loisir selon la revendication 14, **caractérisé en ce que** le dispositif de refroidissement (3) est disposé derrière le dispositif de chauffage (2), par rapport à un côté avant du système de climatisation qui est dirigé vers l'espace à climatiser et qui présente l'entrée d'air.
